# DEMANDE DE BREVET EUROPEEN

(11) **EP 1 146 483 A1**
(43) Date de publication de la demande: **17.10.2001**
(21) Numéro de dépôt: 01400924.5
(22) Date de dépôt: 10.04.2001
(51) Int. Cl.: G07B 15/02, G07F 7/00

(54) **Terminal horodateur de paiement du stationnement payant d'un véhicule automobile**

(30) Priorité: 11.04.2000 FR 0004655
(71) Demandeur: FRANCE TELECOM, 75015 Paris (FR)
(72) Inventeur: Dru, Christian, 14860 Ranville (FR)
(74) Mandataire: Habasque, Etienne Joel Jean-François

(57) **Abrégé**

Ce terminal horodateur de paiement du stationnement payant d'un véhicule automobile comprend des moyens (10) de paiement associés, d'une part, à des moyens (18) de conversion d'une somme acquittée en une durée de stationnement pendant laquelle le véhicule est autorisé à stationner et, d'autre part, à un organe (20) d'impression de tickets de stationnement portant des informations relatives à la durée de stationnement. Les moyens de paiement comportent un lecteur (10) de cartes prépayées de paiement de télécommunications associé à des moyens (38) pour l'entrée d'une somme d'argent ou d'une durée de stationnement souhaitée et à des moyens (12, 14) pour débiter la carte d'un nombre d'unités téléphoniques correspondant à la somme d'argent ou à la durée de stationnement, les moyens de conversion comportant des moyens (18) pour convertir les unités téléphoniques prélevées en durée de stationnement.

## Description

La présente invention se rapporte à un terminal du type terminal horodateur de paiement du stationnement payant d'un véhicule automobile.

Les terminaux horodateurs de ce type comprennent généralement des moyens de paiement associés, d'une part, à des moyens de conversion d'une somme acquittée en une durée de stationnement pendant laquelle le véhicule est autorisé à stationner et, d'autre part, à un organe d'impression et de distribution de tickets de stationnement portant des informations relatives à la durée de stationnement.

Généralement, les moyens de paiement sont constitués par un monnayeur ou par un lecteur de cartes susceptible de lire une carte de stationnement spécifique.

Le but de l'invention est de fournir un terminal horodateur du type précité permettant le paiement du stationnement au moyen d'une carte de paiement de télécommunications.

Elle a donc pour objet un terminal du type précité caractérisé en ce que les moyens de paiement comportent un lecteur de cartes prépayées de paiement de télécommunications associé à des moyens pour l'entrée d'une somme d'argent ou d'une durée de stationnement souhaitée et à des moyens pour débiter la carte d'un nombre d'unités téléphoniques correspondant à la somme d'argent ou à la durée de stationnement, les moyens de conversion comportant des moyens pour convertir les unités téléphoniques prélevées en durée de stationnement.

Ce terminal horodateur peut également comporter une ou plusieurs des caractéristiques suivantes, prises isolément ou selon toutes les combinaisons techniquement possibles :
- les moyens de paiement comportent un lecteur de cartes bancaires associé auxdits moyens pour l'entrée d'une somme d'argent ou d'une durée de stationnement et à des moyens pour l'établissement d'une liaison téléphonique avec un organisme de gestion de cartes bancaires pour la réalisation d'une transaction financière dont le montant correspond à la durée de stationnement,
- le lecteur de cartes téléphoniques et le lecteur de cartes bancaires sont constitués par un unique lecteur de cartes à mémoire, et des moyens de détection sont prévus pour détecter le type de carte introduite dans le lecteur,
- les moyens de détection comportent des moyens de lecture de la signature électronique de la carte et des moyens de comparaison de la signature électronique lue avec des signatures électroniques stockées en mémoire correspondant chacune à un type de carte,
- il comporte des moyens de raccordement du terminal à une unité de raccordement de publiphones à un réseau téléphonique commuté,
- il comporte des moyens pour l'identification du porteur de la carte bancaire,
- il comporte des moyens d'authentification d'une carte introduite dans le lecteur,
- les moyens d'authentification comportent des moyens de lecture de la signature électronique de la carte et des moyens de comparaison de la signature lue avec une signature électronique correspondant à une carte autorisée à être lue par le lecteur.

D'autres caractéristiques et avantages ressortiront de la description suivante, donnée uniquement à titre d'exemple, et faite en référence aux dessins annexés sur lesquels :
- la figure 1 est un schéma synoptique d'un terminal horodateur de paiement conforme à l'invention, et
- la figure 2 est une organigramme montrant les différentes phases de fonctionnement du terminal de la figure 1.

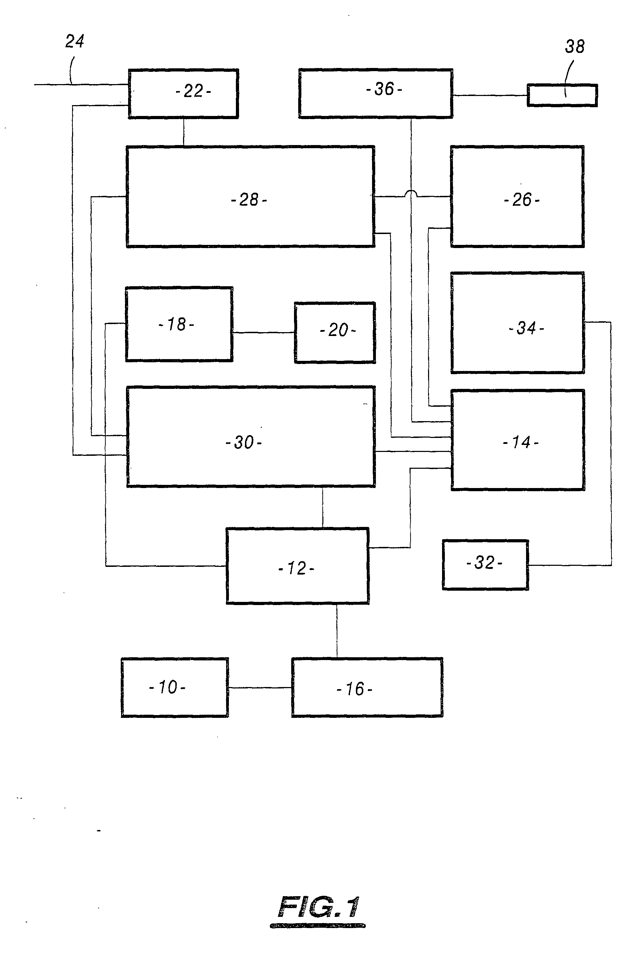

Sur la figure 1, on a représenté un terminal horodateur de paiement conforme à l'invention.

Il est destiné à permettre le paiement du stationnement payant d'un véhicule automobile, soit au moyen d'une carte bancaire, soit au moyen d'une carte prépayée de télécommunications.

A cet effet, il comporte un lecteur 10 de cartes à mémoire, capable de lire indifféremment une carte bancaire ou une carte de paiement de télécommunications, notamment de type prépayée. Il est raccordé par l'intermédiaire d'une interface de couplage 12 à une unité centrale de traitement 14 dans laquelle sont stockés tous les algorithmes nécessaires au fonctionnement du terminal.

On notera que ces moyens de paiement pourraient également être agencés sous la forme de deux lecteurs de cartes à mémoire adaptés chacun pour recevoir un type spécifique de cartes, à savoir carte bancaire ou carte prépayée de télécommunications, et associés à des moyens de sélection appropriés. Toutefois, le mode de réalisation visible sur la figure 1 dans lequel on utilise un unique lecteur de cartes pour la lecture des deux types de cartes à mémoire constitue un mode de réalisation préféré.

Cependant ces moyens de paiement peuvent avantageusement être complétés par un monnayeur, de type classique (non représenté) permettant le paiement au moyen de pièces de monnaie.

Le lecteur de cartes 10 est raccordé à un étage 16 de détection de fausses cartes dans lequel est chargé un algorithme de lecture de la signature électronique de chaque carte insérée dans le lecteur 10 et de comparaison de cette signature électronique avec une ou plusieurs signatures électroniques stockées en mémoire et correspondant chacune à la signature d'une carte autorisée à être lue par le terminal.

Ainsi, dans le cas où la signature de la carte ne correspond pas à une signature électronique mémorisée, on décide que la carte n'est pas authentique.

L'interface de couplage 12 est raccordée à un étage 18 de conversion d'une somme acquittée en utilisant les moyens de paiement, en une durée de stationnement pendant laquelle un véhicule est autorisé à stationner.

L'étage 18 de conversion est raccordé à un étage 20 d'impression et de distribution de tickets de stationnement portant, en particulier, des informations relatives à la durée de stationnement, et éventuellement l'heure de début et l'heure de fin de stationnement.

Par ailleurs, le terminal est doté d'une interface 22 de raccordement du terminal à une ligne téléphonique 24 et d'un module 26 de télétransmission de données et de raccordement du terminal à une unité classique de raccordement de publiphones à un réseau téléphonique commuté.

Le module de télétransmission et de raccordement 26 est raccordé à l'unité centrale de traitement 14 et à un module 28 de téléphonie, lui-même raccordé à l'interface de raccordement 22, pour assurer toutes les commutations nécessaires à l'établissement d'une communication téléphonique sur la ligne 24.

Enfin, le terminal est doté d'un module 30 détecteur d'alarmes raccordé à l'unité centrale de traitement 14 au module 28 de téléphonique et à l'interface de raccordement 22 du terminal à la ligne téléphonique 24 pour détecter tous les dysfonctionnements susceptibles d'apparaître dans le terminal.

Le terminal visible sur la figure 1 est complété par des moyens d'alimentation constitués, d'une part, par une batterie 32 et par un module d'alimentation 34 adapté pour assurer l'alimentation des différents éléments entrant dans la constitution du terminal, à partir de la tension fournie par la batterie 32 et, d'autre part, par une tension d'alimentation externe fournie par l'unité-de raccordement de publiphones au réseau téléphonique commuté, par l'intermédiaire du module de télétransmission 26. Enfin, des organes formant interface homme/machine, constitués principalement par un écran 36 et par un clavier 38, permettent, conjointement, de présenter à un utilisateur un mode d'emploi du terminal, sous la forme d'un menu déroulant, et l'entrée d'une durée de stationnement souhaitée par l'utilisateur ou d'une somme d'argent correspondant à cette durée.

Comme mentionné précédemment, le terminal qui vient d'être décrit dispose de deux modes de fonctionnement, à savoir un premier mode de fonctionnement selon lequel le paiement est effectué au moyen d'une carte bancaire, et un deuxième mode de fonctionnement selon lequel le paiement est effectué au moyen d'une carte prépayée de télécommunications. On pourrait, comme mentionné précédemment, envisager un troisième mode de fonctionnement selon lequel le paiement peut s'effectuer en introduisant directement une somme d'argent dans un monnayeur équipant le terminal.

On pourrait également envisager un unique mode de fonctionnement selon lequel le paiement ne s'effectue qu'au moyen d'une carte téléphonique.

Le choix du mode de fonctionnement utilisé peut soit s'effectuer en présentant à l'utilisateur un message sur l'écran 36 l'invitant à choisir le mode de paiement qu'il souhaite utiliser, soit en détectant le type de carte insérée dans le lecteur 10. Cependant, conformément à l'invention, on détecte automatiquement le mode de paiement utilisé en détectant le type de carte insérée dans le lecteur au moyen d'un algorithme approprié chargé dans l'unité centrale de traitement 14 et adapté pour assurer la lecture de la signature électronique de la carte insérée dans le lecteur et pour comparer cette signature avec des signatures électroniques correspondantes stockées en mémoire dans l'unité centrale 14 et correspondant chacune à un type de carte susceptible d'être lue par le terminal, à savoir une carte bancaire ou une carte de télécommunications.

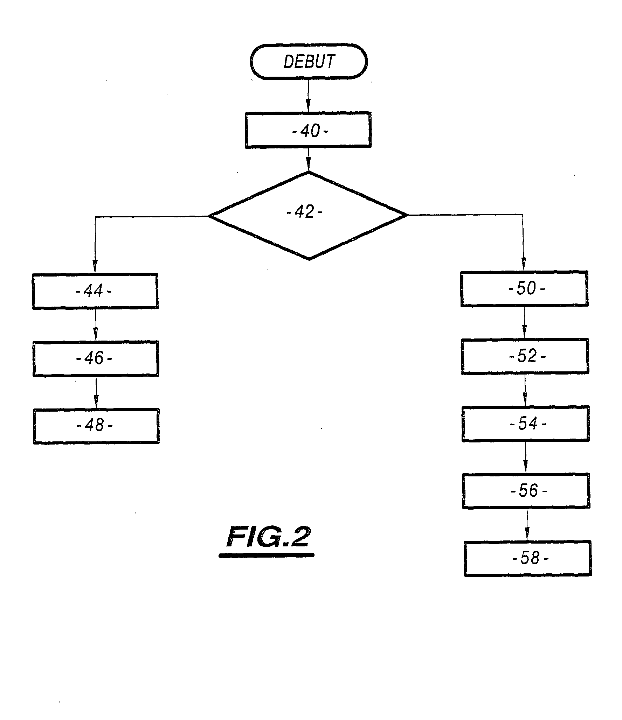

La description détaillée du fonctionnement du terminal qui vient d'être décrit va maintenant être faite en référence à la figure 2.

Au report, l'écran 36 invite l'utilisateur à insérer une carte dans le lecteur 10.

La première étape 40 correspond alors à l'introduction d'une carte dans le lecteur 10.

Lors de l'étape 42 suivante, le terminal contrôle, au moyen de l'étape 16 de détection de fausses cartes, que la carte introduite n'est pas une carte contrefaite et procède, au moyen du module 30 détecteur d'alarmes sous le contrôle de l'unité centrale 14, à des contrôles préliminaires de manière à vérifier que la batterie 32 est en charge maximale ou en charge normale par rapport à un seuil de tension minimale, que la carte a été correctement introduite, que les échanges de données avec l'unité de raccordement de publiphones s'effectuent de façon correcte et que les échanges de données avec le lecteur 10 s'effectuent normalement.

Dans le cas où la batterie est déchargée et où les échanges de données avec l'unité de raccordement des publiphones ou avec le lecteur de cartes 10 s'effectuent de façon incorrecte, l'unité centrale de traitement 14 provoque l'affichage, sur l'écran 36, d'un message indiquant que l'appareil est hors service.

Au cours de cette étape 42, si le résultat des contrôles préliminaires s'avère correct, l'unité centrale de traitement 14 procède à une détection du type de carte insérée dans le lecteur, par lecture de la signature électronique de cette carte et comparaison de cette dernière avec des signatures électroniques correspondant chacune à un type de cartes, comme mentionné précédemment.

Lors de cette étape 42, s'il a été détecté que la carte correspond à une carte prépayée de télécommunications, lors de l'étape 44 suivante, l'unité centrale 14 provoque l'affichage, sur l'écran 36, d'un menu déroulant indiquant le crédit disponible sur la carte et invitant l'utilisateur à entrer, au moyen du clavier 38, une somme d'argent correspondant à une durée de stationnement souhaitée ou, directement, la durée de stationnement.

Lors de l'étape 46 suivante, après entrée de ces données par l'utilisateur, la carte téléphonique est débitée par l'interface de couplage 12 d'un nombre d'unités téléphoniques correspondant à la durée de stationnement souhaité, ces unités téléphoniques étant converties, au moyen du convertisseur 18 en durée de stationnement. Un ticket de stationnement 20 est alors édité et distribué de manière que l'utilisateur puisse le positionner à l'intérieur de son véhicule.

Après cette étape 46, la procédure se poursuit par une étape finale 48 au cours de laquelle le terminal se positionne dans un mode de fonctionnement au repos selon lequel il invite tout utilisateur à introduire une carte dans le lecteur 10.

Dans le cas où, lors de l'étape 42 précédente, il a été détecté que la carte introduite correspond à une carte bancaire, lors de l'étape 50 suivante, l'unité centrale de traitement 14 procède à une identification du porteur de la carte bancaire en l'invitant à introduire son code personnel.

Lors de l'étape 52 suivante, si le code entré par l'utilisateur correspond au code stocké dans la carte bancaire, l'unité centrale 14 procède à une vérification de l'authenticité de la carte, par vérification de sa signature électronique par comparaison de cette dernière avec une signature correspondant à une carte autorisée à être lue par le lecteur, au moyen d'un algorithme d'authentification approprié.

L'unité centrale de traitement 14 invite alors l'utilisateur à entrer, au moyen du clavier 38, une durée de stationnement ou une somme d'argent correspondant à cette durée (étape 54).

A l'issue de cette étape, le module 28 de téléphonie est activé de manière à établir une liaison téléphonique avec un organisme de gestion de cartes bancaires en vue de la réalisation d'une transaction financière portant sur le montant introduit par l'utilisateur, cette transaction ayant pour effet de débiter le compte bancaire de l'utilisateur d'un montant correspondant à cette somme (étape 56).

A l'issue de cette étape 56, un ticket de stationnement est émis et la communication téléphonique est coupée (étape 58).

L'étape 60 ultérieure correspond à une étape finale de repos au cours de laquelle le terminal invite tout utilisateur à entrer une carte à mémoire.

## Revendications

1. Terminal horodateur de paiement de stationnement payant d'un véhicule automobile, comprenant des moyens de paiement (10) actionnables par carte à mémoire, associés à des moyens de conversion (18) d'une somme acquittée en une durée de stationnement pendant laquelle le véhicule est autorisé à stationner, **caractérisé en ce que** les moyens de paiement sont constitués par un unique lecteur (10) de cartes à mémoire, acceptant les cartes téléphoniques et les cartes bancaires, et comportant des moyens de détection du type de carte introduite dans le lecteur.

2. Terminal selon la revendication 1, **caractérisé en ce qu'**en vue d'un paiement par carte bancaire, les moyens de paiement sont associés à des moyens (22, 26, 28) pour l'établissement d'une liaison téléphonique avec un organisme de gestion de cartes bancaires pour la réalisation d'une transaction financière dont le montant correspond à la durée de stationnement.

3. Terminal selon la revendication 2, **caractérisé en ce que** les moyens de détection du type de carte comportent des moyens (12, 14) de lecture de la signature électronique de la carte et des moyens (14) de comparaison de la signature électronique lue avec des signatures électroniques stockées en mémoire correspondant chacune à un type de carte (Etape 42).

4. Terminal selon l'une quelconque des revendications 1 à 3, **caractérisé en ce qu'**il comporte des moyens (26) de raccordement du terminal à une unité de raccordement de publiphones à un réseau téléphonique commuté.

5. Terminal selon l'une quelconque des revendications 1 à 4, **caractérisé en ce qu'**il comporte des moyens (14, 38) pour l'identification du porteur de la carte bancaire.

6. Terminal selon l'une quelconque des revendications 1 à 5, **caractérisé en ce qu'**il comporte des moyens (12, 14) d'authentification d'une carte introduite dans le lecteur.

7. Terminal selon la revendication 6, **caractérisé en ce que** les moyens d'authentification comportent des moyens (12, 14) de lecture de la signature électronique de la carte et des moyens (14) de comparaison de la signature lue avec une signature électronique correspondant à une carte autorisée à être lue par le lecteur (Etape 52).
**caractérisé en ce qu'**il comporte des moyens (12, 14) d'authentification d'une carte introduite dans le lecteur.

8. Terminal selon la revendication 7, **caractérisé en ce que** les moyens d'authentification comportent des moyens (12, 14) de lecture de la signature électronique de la carte et des moyens (14) de comparaison de la signature lue avec une signature électronique correspondant à une carte autorisée à être lue par le lecteur.
